# FASCICULE DE BREVET EUROPEEN

(11) **EP 3 646 991 B1**
(45) Date de publication et mention de la délivrance du brevet: **24.08.2022**
(21) Numéro de dépôt: 19200361.4
(22) Date de dépôt: 30.09.2019
(51) Int. Cl.: B25F 5/00, B25B 23/14, B25B 23/142, B25B 23/145, B25B 23/147, G05B 19/418

(54) **SYSTÈME DE CONTRÔLE D'UN OUTIL COMPORTANT UN MOYEN DE COMMUNICATION RADIO DU TYPE ULTRA LARGE BANDE POUR SE LOCALISER ET RECEVOIR DES COMMANDES**
KONTROLLSYSTEM EINES WERKZEUGS, DAS ÜBER EIN ULTRABREITBAND-FUNKKOMMUNIKATIONSMITTEL FÜR SEINE LOKALISIERUNG UND DEN EMPFANG VON BEFEHLEN VERFÜGT
SYSTEM FOR CONTROLLING A TOOL COMPRISING A RADIO COMMUNICATION MEANS OF THE ULTRA-WIDEBAND TYPE FOR PINPOINTING LOCATION AND RECEIVING ORDERS

(30) Priorité: 29.10.2018 FR 1860009
(43) Date de publication de la demande: 06.05.2020
(73) Titulaire: ETABLISSEMENTS GEORGES RENAULT, 44800 Saint Herblain (FR)
(72) Inventeur: Charles Hubert, PERRE, 44100 NANTES (FR); Laurent, PINEAU, 44100 NANTES (FR)
(74) Mandataire: Vidon Brevets & Stratégie

(56) Documents cités:
- EP-A1- 2 138 861
- EP-A1- 3 187 947
- EP-A1- 3 444 690
- WO-A1-2016/198973
- US-B1- 9 256 220

## Description

### 1 DOMAINE TECHNIQUE

Le domaine de l'invention concerne l'outillage industriel, et notamment des outils fonctionnant sur une chaine de production, et communiquant par radio avec un contrôleur et/ou un serveur distant.

L'invention concerne plus particulièrement le fait que l'outil comporte des moyens de communication du type ultra large bande pour échanger de façon bidirectionnelle des informations de contrôle ou de commande, et des informations de localisation de l'outil.

### 2 ARRIERE-PLAN TECHNOLOGIQUE

Dans le domaine de la production industrielle, d'automobiles ou d'avions par exemple, de nombreux outils électromécaniques ou pneumatiques sont utilisés. Ces outils, qui peuvent être fixes ou portatifs (et dans ce cas équipés de batteries), intègrent des moteurs, notamment électriques ou pneumatiques selon les applications envisagées. Ces outils peuvent être connectés par radio à un serveur distant ou à un contrôleur (qui se présente par exemple sous la forme d'un coffret) permettant de piloter différents cycles de fonctionnement. Il est aussi envisagé dans le futur des contrôleurs virtuels, par exemple sous la forme d'ordinateurs industriels supportant le programme de contrôle des visseuses. Ce type de moyens, contrôleurs, stations ou contrôleurs virtuels est désigné « concentrateur » dans la suite de la description. La communication avec le contrôleur et/ou le serveur distant permet à l'outil de recevoir des consignes de fonctionnement et d'émettre des résultats de vissage.

L'outil de production peut être :
- une visseuse,
- une perceuse,
- un dispositif de contrôle tel que : une clé dynamométrique, un capteur de couple et angle autonome, un dispositif de mesure de conformité de perçage.

Ces outils sont utilisés de préférence dans les ateliers de production, et en particulier sur les lignes de production (dans la production automobile par exemple) pour assurer des opérations d'assemblage ou de contrôle d'assemblage.

La communication radio est utilisée pour échanger des données entre l'outil et le système de gestion de production, par l'intermédiaire d'un point d'accès radio et d'un concentrateur.

La communication entre un outil et un point d'accès radio requiert que l'outil dispose des paramètres de connexion et d'authentification radio à ce point d'accès radio. Une fois la connexion radio entre l'outil et le point d'accès radio effectuée, l'outil doit connaitre la référence et/ou l'identité du concentrateur pour s'y connecter

Ce chargement de paramètres (connexion et authentification avec le point d'accès radio et ID concentrateur) dans l'outil implique soit de saisir les paramètres manuellement avec une interface homme machine associé à un contrôleur ou un concentrateur, soit de connecter l'outil via une liaison filaire au concentrateur où les paramètres relatifs au point d'accès radio auront été renseignés préalablement de façon manuel.

Ceci présente un manque de souplesse si l'opérateur veut utiliser l'outil sur un autre poste de travail avec un point d'accès radio différent.

Le système de gestion de production peut être un serveur ou un automate industriel.

La communication entre point d'accès radio, concentrateur et système de gestion de production est en général réalisée par un réseau filaire Ethernet.

Le concentrateur peut être un dispositif physique intégrant des moyens de contrôle de l'outil et d'enregistrement dédié à des données de vissage ou de perçage. Il peut aussi être un dispositif logiciel s'exécutant sur un ordinateur industriel ou un serveur destiné à contrôler un ou plusieurs outils ou moyens de contrôle.

Le concentrateur assure un rôle de contrôle de l'outil au travers des fonctions de contrôle et de paramétrage des outils, de traçabilité des opérations, et de maintenance.
- fonction de contrôle : activation ou désactivation de l'outil en fonction de la tâche à réaliser ou de sa présence au bon poste de travail.
- fonction de paramétrage : activation ou chargement dans l'outil des paramètres permettant d'exécuter le vissage ou le perçage en respectant les paramètres déterminés par un serveur de gestion de la production.
- traçabilité : exportation depuis l'outil vers un serveur de production des résultats de vissage, perçage ou contrôle.
- maintenance : données relatives à l'état d'usage de l'outil.

En plus de la communication radio, ces outils industriels mobiles sont aussi équipés de balises de localisation appelées « tag », pour déterminer leurs positions et ainsi vérifier qu'ils sont utilisés sur des postes de travail prévus pour leurs utilisations.

De nos jours, les outils industriels utilisent très généralement les technologies de communication du type Wi-Fi, ou Bluetooth, ou encore du type ZigBee. Le standard Wi-Fi couvre un ensemble de protocoles de ancre ou domestiques équipés de petits émetteurs radios à faible consommation. Ce standard qui est décrit par la norme IEEE 802.15.4, est plutôt utilisé pour la transmission de messages courts.

Pour communiquer en Wi-Fi, des points d'accès fixes sont installés dans les ateliers de production pour couvrir tout ou une partie des postes de travail. Les points d'accès WI-FI peuvent éventuellement être intégrés dans le concentrateur suivant les besoins du travail à effectuer. Les outils sont équipés de cartes de communication et se connectent aux points d'accès pour échanger des données avec le serveur de production via le concentrateur. Une installation uniformément répartie de points d'accès Wi-Fi sur une chaine de production permet d'assurer une couverture Wi-Fi sur de nombreux postes de travail.

Les liaisons du type Wi-Fi permettent des transferts de données à haut débit. Les liaisons du type Zigbee nécessitent le même déploiement d'infrastructure, mais le débit est beaucoup plus faible que le Wi-Fi. Les liaisons du type Bluetooth ne sont pas utilisées pour couvrir tout une chaine de production, mais pour couvrir une zone plus restreinte. Le débit est plus faible que le Wi-Fi.

La localisation des outils sur la ligne d'assemblage utilise des techniques de triangulation (utilisation de mesure d'angle depuis l'ancre) ou de multi-latération (utilisation de mesure de distances entre le tag à localiser et plusieurs ancres) utilisant la technologie Ultra Large Bande en abrégé ULB, ou en Anglo saxon « UWB » pour « Ultra Wide Band ».

Le contrôle de la présence de l'outil dans une zone de travail peut impliquer l'usage d'une ou plusieurs ancres suivant qu'il s'agit d'un simple contrôle de distance vis-à-vis d'une ancre ou qu'il s'agit d'un contrôle nécessitant de connaître les coordonnées de l'outil dans un repère associé aux ancres et au poste de travail. La connaissance des coordonnées de l'outil peut être nécessaire, par exemple avec une zone de contrôle parallélépipédique. Ces ancres sont fixées sur une structure environnant le poste de travail et constituant un référentiel fixe. Dans le cadre d'une localisation par trilatération, la mesure de distance entre le tag et les ancres est permise par des communications ULB successives entre le tag et chacune des ancres. Les coordonnées du tag dans ledit référentiel sont ensuite calculées.

De nos jours, l'ULB est une technologie qui est utilisé pour les usages suivants:
- liaison haut débit à très faible portée,
- radar, mesure de distance dans une approche de localisation.

Dans les communications radio traditionnelles (Wi-Fi, Bluetooth, Zigbee), le multi chemin ("multipath") est un phénomène de propagation qui résulte de la réception des signaux radio par un ou plusieurs chemins. Les causes du multi chemins sont nombreuses, et dans une chaine de production, elles proviennent principalement de la réflexion des signaux sur les corps humains ou sur les différents obstacles fixes métalliques, liés à l'infrastructure ou sur des obstacles mobiles.

Le Multi chemin cause des interférences additives ou soustractives (« multipath fading »), ainsi que des décalages de phase du signal radio, ce qui altère le signal reçu par le récepteur et déclenche de multiples erreurs de réception de paquets de données. De ce fait, la bande passante diminue et les temps de transmission des données d'un appareil à l'autre s'allongent. Les problèmes de réception liés aux multi Chemins en Wi-Fi n'interviennent généralement que dans certaines zones très localisées. Lorsque les clients Wi-Fi se connectent avec un fort signal à haut débit, le débit se dégrade rapidement, et les performances Wi-Fi baissent considérablement.

Les normes 802.11n/802.11ac améliorent la gestion du problème multi chemin, grâce aux bénéfices de la technologie MIMO (abrégé de « Multi antennes: Multiple Input Multiple output »). Bien que les nouvelles technologies 802.11n/802.11ac réduisent l'influence du multi-chemin, le problème de multi chemin existe toujours et ne garantit pas une faible latence de communication. Des zones de non couverture radio peuvent toujours exister et empêcher d'établissement d'une liaison Wi-Fi et par conséquent le contrôle d'un poste de travail déterminé par le serveur de production.

La solution proposée par un MIMO n'est pas satisfaisante car elle implique l'utilisation de plusieurs antennes ce qui augmente les coûts et est contraire à l'exigence de compacité imposée aux outils portables.

Les technologies Zigbee et Bluetooth sont aussi affectées par les phénomènes de multi chemin.

Le document US 9256220 B publié le 9 Février 2016 décrit la localisation d'outils lors d'opérations de fabrication d'engins, tels que des avions. Pour surveiller les opérations sur les chaînes de montage, les outils disposent de capteurs de mesure, de moyen d'enregistrer les caractéristiques mesurées du travail effectué, et des moyens de localisation pour vérifier l'endroit où l'outil se trouve. L'ensemble de ces informations est transmis par radio en utilisant des signaux UWB.

Le document EP 2 138 861 publié le 30 Décembre 2009, décrit l'utilisation d'outils dans une chaîne de fabrication d'avion. L'outil dispose de capteurs pour mesurer la qualité du travail effectué et d'un moyen de communication de type ULB pour transmettre les données de travail, les paramètres de programmation et des informations de géolocalisation. Le document EP 3 187 947 A1 divulgue un système de contrôle selon le préambule de la revendication 1. Le document EP 3 444 690 A1, qui en vertu de l'article 54(3) CBE est compris dans l'état de la technique, montre encore un autre système de contrôle.

Il existe donc un besoin pour mettre en œuvre une technique de communication qui prend en compte les problèmes générés par le multi chemin et qui améliore et minimise la latence des communications.

### 3 RESUME

Selon l'invention, il est ainsi proposé un système de contrôle d'un outil comprenant au moins ledit outil et au moins une ancre fixe, l'outil étant au moins doté d'un moyen de communication radio du type ultra large bande et d'une mémoire. L'ancre fixe est dotée d'un moyen de communication radio du type ultra large bande, d'un moyen de contrôle, et d'une mémoire. Les moyens de communication radio dudit outil et de ladite ancre communiquent de façon bidirectionnelle des informations de contrôle ou de commande, et des informations de localisation de l'outil.

De cette manière, le réseau ULB est non seulement utilisé pour déterminer la localisation de l'outil mais aussi pour échanger avec lui des données dédiées à son fonctionnement. Ce type de réseau est moins sensible aux phénomènes de réflexion radio et peut échanger très rapidement des données de commande et de contrôle de l'outil.

Selon un mode particulier de réalisation, les moyens de communication radio de ladite ancre transmettent périodiquement les informations de localisation de l'outil aux cours de laps de temps d'une durée déterminée. De cette manière, l'outil peut être constamment et facilement localisé.

Selon un mode particulier de réalisation, les intervalles de temps transmettant des informations de contrôle et des informations de localisation de l'outil sont alternés. De cette manière, en utilisant le même mode de communication il est possible de transmettre plusieurs type d'information sur un même canal.

Selon un mode particulier de réalisation, les durées des intervalles temporels ont une durée comprise entre 100 et 300 millisecondes. De cette manière, les communications optimisent la bande passante disponible.

Selon un mode particulier de réalisation, les informations de contrôle ou de commande sont transmises sans contrainte temporelle selon un schéma de type CSMA. De cette manière, les communications sont plus rapidement traitées.

Selon l'invention, le système de contrôle d'un outil comporte un concentrateur doté d'un moyen de communication Wi-fi avec cet outil, le moyen de communication par Wi-fi transmet des données tolérant une forte latence et d'une taille supérieure à 100 kilo octets, les moyens de communication radio du type ultra large bande dudit outil et de ladite ancre transmettant les informations de contrôle ou de commande et les informations de localisation de l'outil. De cette manière, l'utilisation de la bande passante disponible est optimisée.

Selon un mode particulier de réalisation, le système de contrôle d'un outil comporte au moins deux concentrateurs dotés chacun d'un moyen de communication Wi-fi ayant des références de point d'accès Wi-fi différents, la détection de l'arrivée de l'outil par le moyen de communication radio du type ultra large bande dans une zone couverte par un second concentrateur déclenchant l'émission par l'ancre vers l'outil de la référence du point d'accès Wi-fi et de l'identifiant du concentrateur associé à la localisation de l'outil, l'outil utilisant son moyen de communication par Wi-fi pour entrer en contact avec ce concentrateur et recevoir de lui des informations de fonctionnement pour le travail associé à cette localisation. De cette manière, le moyen de communication est adapté aux types de données qui sont transmises, et notamment à leur latence.

Selon un mode particulier de réalisation, l'outil est pris dans l'ensemble suivant : une visseuse, une perceuse ou un outil de vérification d'une opération industrielle.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 est schéma montrant les communications entre un outil et un contrôleur selon l'art antérieur ;
- la figure 2 représente le système de contrôle d'un outil selon un mode de réalisation de l'invention ;
- la figure 3 illustre un schéma d'utilisation du standard TDMA pour transmettre des données de localisation et des données de contrôle de l'outil ;
- la figure 4 illustre un schéma d'utilisation d'une communication radio ULB alternant des données de contrôle de l'outil et de données de géolocalisation ;
- la figure 5 montre un premier exemple d'implémentation, non couvert par les revendications, d'un outil dans une configuration autonome ;
- la figure 6 montre un second exemple d'implémentation, non couvert par les revendications, d'un outil communiquant par une liaison ULB avec un concentrateur via une ancre ;
- la figure 7 montre un troisième exemple d'implémentation d'un outil communiquant par Wi-fi et par une liaison ULB avec un concentrateur via une ancre.

### 5 DESCRIPTION DETAILLEE DE L'INVENTION

Sur toutes les figures du présent document, les éléments identiques sont désignés par une même référence.

Le principe général de la technique décrite repose sur le partage des moyens de communication et de consacrer certains réseaux pour la transmission de données à haut débit et d'autres réseaux pour des données de contrôle nécessitant une faible latence.

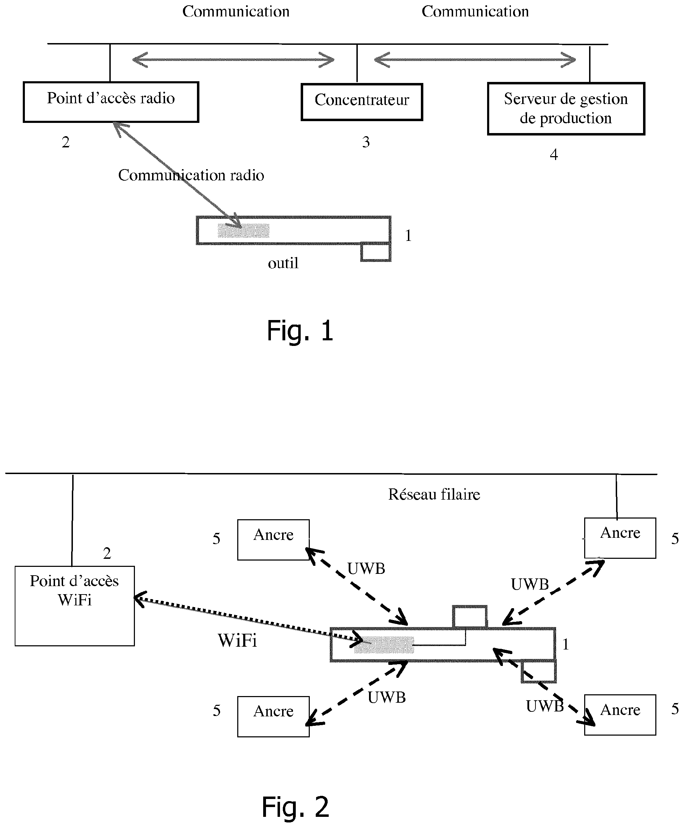

Le système décrit par la **Fig.** 1, représente l'art antérieur. On peut voir un outil 1 en communication radio par le réseau Wi-fi avec un point d'accès 2, ce point d'accès communique ensuite par un réseau filaire avec un concentrateur 3 qui regroupe localement les communications. Au sein d'une unité de production, l'ensemble des concentrateurs communique par un réseau filaire de préférence avec un serveur de gestion de production 4 qui organise l'ensemble de la production et planifie les opérations à effectuer dans les différents ateliers. Ce serveur de gestion 4 peut notamment transmettre les paramètres d'utilisation pour chaque outil (par exemple les recettes de vissage qui sont transmises aux visseuses) et recevoir les résultats des opérations.

L'outil communique également avec au moins une ancre (non représentée sur la Fig. 1) qui émet des signaux Ultra Large Bande (en abrégé « ULB », ou en langue Anglo-saxonne « UWB » pour « Ultra Wide Band « ) pour géolocaliser l'objet. La géolocalisation utilise le fait que les ondes radio mettent un certain temps à aller et venir entre deux appareils et que le temps de transmission est proportionnel à la distance. Les ancres émettent périodiquement des paquets de données contenant des signaux de mesure de distance lors d'intervalles de temps réguliers, le traitement de ces signaux par l'outil permet de produire une information de localisation. Les durées des intervalles temporels ont de préférence une durée comprise entre 100 et 300 millisecondes.

La limitation basse de 100 millisecondes permet notamment de respecter le rapport cyclique de 1/200 imposé à l'ULB inférieur à 6 GHz dans le cadre des normes relatives au standard ULB. La limitation haute de 300 millisecondes permet de garantir une réactivité suffisante, une valeur plus grande ne permettrait pas un rafraichissement suffisamment fréquent de la localisation pour un usage réactif de l'outil du point de vue de l'opérateur.

La **Fig.2** représente le système de contrôle d'un outil selon un mode de réalisation, selon cet exemple l'outil est une visseuse. Le système de contrôle comporte au moins un outil 1, au moins un point d'accès 2 communiquant en Wi-fi avec l'outil, et au moins une ancre 5 communiquant avec l'outil à l'aide d'un réseau Ultra Large Bande, en abrégé « ULB », ou en langue Anglo-saxonne « UWB » pour « Ultra Wide Band ». La communication radio avec le point d'accès Wi-fi est possible en indiquant dans les messages la référence SSID de ce point d'accès.

Selon l'invention, l'outil utilise deux réseaux différents de communication : une première liaison radio à faible latence pour contrôler cet outil : par exemple le verrouillage et le déverrouillage de l'outil, l'état associé à une opération de production (vissage correct / vissage incorrect par exemple), sélection du programme de vissage ou de perçage. Cette liaison radio est utilisée pour transmettre des messages qui sont avantageusement mise en œuvre par le réseau ULB.

L'outil utilise également une seconde liaison radio à haut débit, sans contrainte forte sur la latence du signal pour les données telles que le paramétrage de l'outil, la traçabilité complète d'une opération de production, les résultats détaillés avec courbe graphique, les données de maintenance, ... Cette liaison radio est utilisée pour transmettre des messages plus volumineux, par exemple de plus de 100 Ko. Ces messages contenant des fichiers ayant un volume important ne sont pas prioritaires par rapport aux informations de contrôle, l'émission des messages peut donc s'étaler dans le temps.

La présente invention s'appuie sur l'utilisation de ces 2 réseaux différents pour transmettre des messages courts à faible latence, et des messages longs à latence plus longue.

Pour cela, le système de localisation ULB selon l'art antérieur est modifié pour ajouter dans son protocole de communication radio ULB utilisé pour mesurer les distances, des trames de communication permettant d'échanger de manière bidirectionnelle des données avec l'outil de production.

La robustesse des communications avec faible latence est assurée par l'utilisation du réseau ULB, qui est peu affecté par les phénomènes de réflexion générant du multi-chemin. La communication radio pourrait même s'effectuer en chemin indirect par réflexion, dans le cas où le chemin direct est trop affaibli par des obstacles.

La communication radio s'appuyant sur la technologie Wi-fi ou Bluetooth est utilisée pour des flux sans contrainte de latence et à haut débit. Cette technologie assure un bon débit de transfert, mais est soumise aux inconvénients du multi chemin lié aux obstacles fixes et mobiles. Rappelons que cette technologie ne permet pas :
- de garantir un temps déterministe de communication pour contrôler l'outil,
- une couverture radio dans une zone soumise à un phénomène de multi chemin.

Le standard TDMA (de l'Anglo-saxon « Time division multiple access » ou « TDMA » en abrégé) peut avantageusement être utilisé pour les communications ULB dédiés à la géolocalisation des outils. Rappelons que le standard TDMA décrit un mode de multiplexage de données permettant de transmettre plusieurs flux de communication sur un seul canal fréquentiel. Ce multiplexage temporel consiste à découper le temps disponible sur un canal de communication physique pour l'allouer entre différents opérateurs ou application. En l'occurrence, l'invention permet d'utiliser la liaison ULB pour de la géolocalisation (1^{ière} application) et pour de la transmission d'un certain type de données (2^{nd} application ) telles que les informations de contrôle.

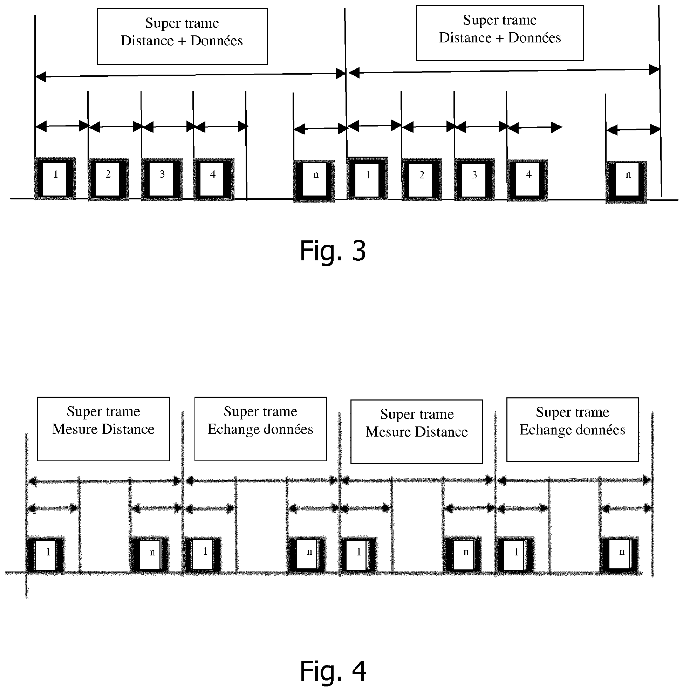

La **Fig. 3** représente un schéma d'utilisation du standard TDMA pour transmettre des données de géolocalisation et des données de contrôle de l'outil. Les données de contrôle étant peu volumineuses et leur nombre relativement faible, elles peuvent facilement s'intercaler entre des trames de paquets de données contenant des signaux de mesure de distance (représentées par des carrés avec un numéro sur le **Fig.3****).**

Dans le cas où le nombre et/ou la taille des données à transmettre à l'outil est plus important (ces données concernant le paramétrage, la traçabilité, la maintenance, ...), le schéma de la **Fig. 3** peut être modifié pour alterner les trames de communication de mesures de distance et d'échange de données.

La communication radio ULB, permet dans le schéma TDMA illustré par la **Fig. 4**, d'alterner la mesure de distances et l'échange de données, dans un schéma déterministe puisque borné par le temps de cycle de la trame. Le schéma TDMA intègre de façon préférentielle 128 créneaux temporels (ou « Time Slot » en langue anglo saxonne) de 500 µs chacun. L'alternance entre la transmission de données de contrôle de l'outil et de données de géolocalisation divise par deux la fréquence de rafraîchissement des données de localisation.

### Variante de réalisation

Une variante d'un schéma utilisant un TDMA est maintenant décrite.

Rappelons tout d'abord que les données de contrôle ne sont pas cycliques et interviennent de façon aléatoire dans le temps. L'émission de ces données est déclenchée par des évènements tels que : autorisation de vissage, vissage terminé, ... L'utilisation d'un accès Multiple avec écoute de la porteuse, combiné à une détection de collision de communication (CSMA/CD) permet aux outils d'échanger périodiquement des informations de localisation de l'outil, et de transmettre des données de fonctionnement à la demande de l'outil 1. Si aucune donnée de contrôle n'est à émettre, il est alors possible d'utiliser l'intervalle temporel ainsi libéré. Cette technique permet donc de ne pas attendre l'intervalle temporel dédié à une certaine communication pour transmettre la donnée. Cette technique n'est cependant utilisable que dans le cas d'un faible nombre d'équipements (outils, ancres, ...). Dans le cas contraire, un nombre important d'équipements augmente le risque de collisions, et dans ce cas, il est préférable d'utiliser le standard TDMA.

Différents exemples d'implémentation de la présente invention vont maintenant être décrits.

### Exemples

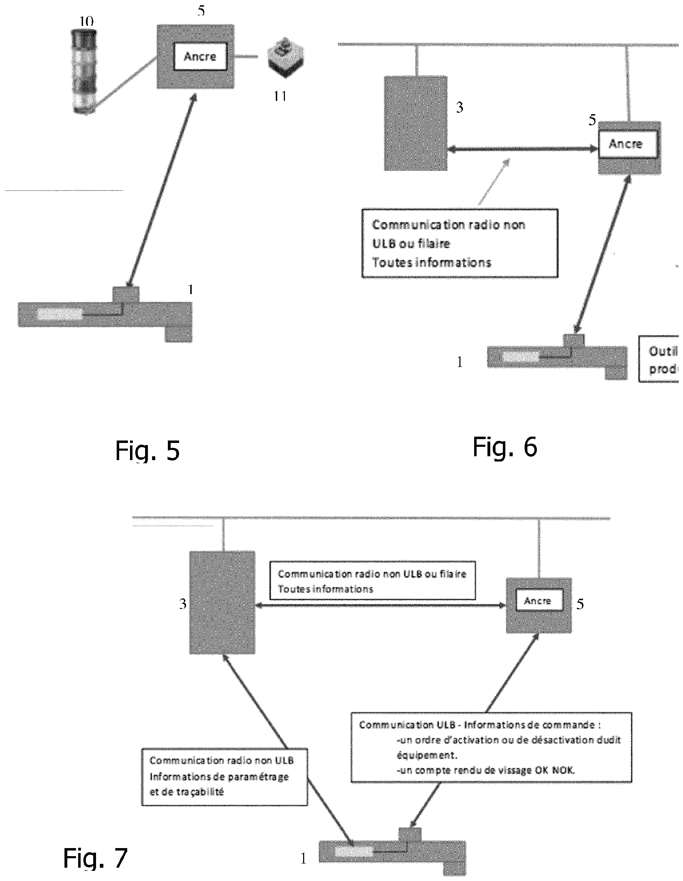

Selon un cas simple de réalisation illustré par la **Fig. 5****,** et non couvert par les revendications, le réseau de la ligne de production ne comporte pas d'Ethernet, ni de communication WI-FI vers une infrastructure externe autre que le système de géolocalisation. Selon cet exemple, il n'y a pas de concentrateur ni de serveur de gestion de production. Ce cas correspond à celui d'un outil 1 qui est autonome et non piloté à distance par le serveur de gestion de production. Au sein de la chaîne de fabrication, cet outil nécessite de la géolocalisation pour fonctionner correctement et d'une interface utilisateur simplifiée pour interagir avec un opérateur.

Le système de localisation basé sur des signaux de type ULB est utilisé pour transmettre les trames de paquets de données contenant des signaux de mesure de distance et des données de contrôle telles qu'un compte rendu de vissage. Ces données de contrôle sont reçues par un moyen d'affichage 10 permettant notamment à l'opérateur de savoir si le vissage s'est bien déroulé ou pas. Ces données de contrôle peuvent aussi être une commande d'activation ou de désactivation du système, par exemple lors d'un vissage sur un poste de travail. La commande d'activation peut être introduite à l'aide d'un bouton poussoir 11 relié électriquement à l'ancre.

Selon un second cas de réalisation illustré par la **Fig. 6****,** et non couvert par les revendications, le système comporte un concentrateur 3 et la communication Wi-fi est trop mauvaise, voire interdite, pour être utilisée du fait de réflexions générant des problèmes de multi-chemins. Dans un tel cas, l'intégralité des communications passent par la communication ULB qui constitue le seul lien radio entre les ancres et l'outil.

Ces deux premiers cas sont adaptés à des postes de travail où les paramètres de fonctionnement de l'outil sont communiqués par l'ancre lorsque l'outil est détecté à cet endroit et qu'il requiert des paramètres pour fonctionner.

Selon un troisième cas de réalisation illustré par la **Fig. 7****,** le poste de travail utilise les 2 types de communication radio ULB et WI-FI pour communiquer avec l'outil. Ce cas est particulièrement adapté à une chaine de production automobile.

Les moyens de communication radio du type ULB de l'outil et des ancres transmettent les informations de contrôle ou de commande de l'outil, ainsi que les informations de localisation de l'outil. Les informations sans contrainte forte sur la latence du signal, telles que : le paramétrage de l'outil, le résultat détaillé d'une opération, des données de maintenance, ... ces messages ayant typiquement une taille supérieure à 100 Ko, sont échangés par le réseau Wi-fi entre l'outil et le point d'accès.

### Procédure d'appairage d'un outil avec un point d'accès Wi-fi

Dans le cas d'une chaine de production, et notamment dans le domaine automobile, un même outil peut passer d'un poste de travail à un autre, les deux postes étant couverts par deux réseaux WI-FI distincts appairés à deux concentrateurs différents. Auparavant, une telle situation imposait à l'opérateur de reconfigurer manuellement son outil pour changer la référence SSID de son point d'accès Wi-fi et l'identifiant du concentrateur.

Selon une variante de réalisation, lorsqu'une ancre 5 détecte qu'un nouvel outil se trouve maintenant dans le poste travail où elle-même se situe, alors cette ancre 5 transmet à cet outil la référence du point d'accès Wi-fi et l'identifiant du concentrateur avec qui il est appairé. L'outil utilise alors le réseau Wi-fi pour entrer en contact avec ce concentrateur en utilisant les identifiants transmis et recevoir de lui par liaison Wi-fi des informations de fonctionnement pour le travail associé à cette localisation, ces informations étant sans contrainte forte sur la latence du signal et d'une certaine taille.

## Revendications

1. Système de contrôle d'un outil (1) comprenant au moins ledit outil et au moins une ancre fixe (5), ledit outil étant au moins doté d'un moyen de communication radio du type ultra large bande, et d'une mémoire,
ladite au moins une ancre fixe (5) étant dotée d'un moyen de communication radio du type ultra large bande, d'un moyen de contrôle, et d'une mémoire, les moyens de communication radio dudit outil (1) et de ladite au moins une ancre (5) communiquant de façon bidirectionnelle des informations pour déterminer la localisation de l'outil,
ledit système comportant un concentrateur (3) doté d'un moyen de communication Wi-fi avec ledit outil, ledit moyen de communication par Wi-fi transmettant des données tolérant une forte latence et d'une taille supérieure à 100 kilo octets, ledit concentrateur (3) et ladite ancre fixe (5) étant reliés par un réseau filaire, et le système étant **caractérisé en ce que**
les moyens de communication radio du type ultra large bande dudit outil et de ladite au moins une ancre fixe (5) sont configurés pour transmettre en sus des informations de contrôle ou de commande de l'outil (1).

2. Système de contrôle d'un outil selon la revendication 1, **caractérisé en ce que** les moyens de communication radio de ladite au moins une ancre (5) sont configurés pour transmettre
périodiquement les informations pour déterminer localisation de l'outil (1) aux cours de laps de temps d'une durée déterminée.

3. Système de contrôle d'un outil selon la revendication 2, **caractérisé en ce que** les intervalles de temps transmettant des informations de contrôle et des informations pour déterminer localisation de l'outil (1) sont alternées.

4. Système de contrôle d'un outil selon la revendication 3, **caractérisé en ce que** les durées des intervalles temporels ont une durée comprise entre 100 et 300 millisecondes.

5. Système de contrôle d'un outil selon la revendication 1, **caractérisé en ce que** les informations de contrôle ou de commande sont transmises sans contrainte temporelle selon un schéma de type CSMA.

6. Système de contrôle d'un outil (1) selon l'une quelconque des revendications 1 à 5, **caractérisé en ce qu'**il comporte au moins deux concentrateurs (3) dotés chacun d'un moyen de communication Wi-fi ayant des références de point d'accès Wi-fi différents, la détection de l'arrivée de l'outil (1) par le moyen de communication radio du type ultra large bande dans une zone couverte par un second concentrateur (3) déclenchant l'émission par l'au moins une ancre (5) vers l'outil (1) de la référence du point d'accès Wi-fi et de l'identifiant du concentrateur (3) associé à la localisation de l'outil (1), l'outil (1) utilisant son moyen de communication par Wi-fi pour entrer en contact avec ce concentrateur (3) et recevoir de lui des informations de fonctionnement pour le travail associé à cette localisation.

7. Système de contrôle d'un outil selon l'une quelconque des revendications précédentes, **caractérisé en ce que** l'outil est pris dans l'ensemble suivant : une visseuse, une perceuse ou un outil de vérification d'une opération industrielle.

## Patentansprüche

1. System zur Steuerung eines Werkzeugs (1), das mindestens das Werkzeug und mindestens einen festen Anker (5) umfasst, wobei das Werkzeug mindestens mit einem Funkkommunikationsmittel vom Ultrabreitbandtyp und mit einem Speicher versehen ist,
wobei der mindestens eine feste Anker (5) mit einem Funkkommunikationsmittel vom Ultrabreitbandtyp, mit einem Steuerungsmittel und mit einem Speicher versehen ist, wobei die Funkkommunikationsmittel des Werkzeugs (1) und des mindestens einen Ankers (5) Informationen zum Bestimmen des Ortes des Werkzeugs zweiseitig kommunizieren,
wobei das System einen Konzentrator (3) umfasst, der mit einem Wifi-Kommunikationsmittel mit dem Werkzeug versehen ist, wobei das Wifi-Kommunikationsmittel Daten sendet, die eine hohe Latenz zulassen und eine Größe von über 100 Kilobyte aufweisen, wobei der Konzentrator (3) und der feste Anker (5) durch ein Drahtnetz verbunden sind und das System **dadurch gekennzeichnet ist, dass** die Funkkommunikationsmittel vom Ultrabreitbandtyp des Werkzeugs und des mindestens einen festen Ankers (5) dazu ausgestaltet sind, dazu noch Steuerungs- oder Befehlsinformationen des Werkzeugs (1) zu senden.

2. System zur Steuerung eines Werkzeugs nach Anspruch 1, **dadurch gekennzeichnet, dass** die Funkkommunikationsmittel des mindestens einen Ankers (5) dazu ausgestaltet sind, periodisch Informationen zum Bestimmen des Ortes des Werkzeugs (1) während Zeiträumen mit einer bestimmten Dauer zu senden.

3. System zur Steuerung eines Werkzeugs nach Anspruch 2, **dadurch gekennzeichnet, dass** die Zeitintervalle, die Steuerungsinformationen und Informationen zum Bestimmen des Ortes des Werkzeugs (1) senden, einander abwechseln.

4. System zur Steuerung eines Werkzeugs nach Anspruch 3, **dadurch gekennzeichnet, dass** die Dauern der Zeitintervalle eine Dauer von zwischen 100 und 300 Millisekunden aufweisen.

5. System zur Steuerung eines Werkzeugs nach Anspruch 1, **dadurch gekennzeichnet, dass** die Steuerungs- oder Befehlsinformationen ohne Zeitbeschränkung gemäß einem Schema vom Typ CSMA gesendet werden.

6. System zur Steuerung eines Werkzeugs (1) nach einem der Ansprüche 1 bis 5, **dadurch gekennzeichnet, dass** es mindestens zwei Konzentratoren (3) umfasst, die jeweils mit einem Wifi-Kommunikationsmittel versehen sind, die unterschiedliche Wifi-Zugangspunktreferenzen aufweisen, wobei die Feststellung des Eintreffens des Werkzeugs (1) durch das Funkkommunikationsmittel vom Ultrabreitbandtyp in einer von einem zweiten Konzentrator (3) abgedeckten Zone das Aussenden der Wifi-Zugangspunktreferenzen und der Kennung des dem Ort des Werkzeugs (1) zugehörigen Konzentrators (3) durch den mindestens einen Anker (5) an das Werkzeug (1) auslöst, wobei das Werkzeug (1) sein Wifi-Kommunikationsmittel nutzt, um mit diesem Konzentrator (3) in Kontakt zu treten und von ihm Betriebsinformationen für die diesem Ort zugehörige Arbeit zu empfangen.

7. System zur Steuerung eines Werkzeugs nach einem der vorhergehenden Ansprüche, **dadurch gekennzeichnet, dass** das Werkzeug in der folgenden Anordnung aufgenommen ist: einer Schraubmaschine, einer Bohrmaschine oder einem Werkzeug zur Prüfung eines industriellen Vorgangs.

## Claims

1. A system for controlling a tool (1) comprising at least said tool and at least one fixed anchor (5), said tool being at least provided with a radio communication means of the ultra-wideband type, and with a memory,
said at least one fixed anchor (5) being provided with a radio communication means of the ultra-wideband type, with a control means, and with a memory, the radio communication means of said tool (1) and of said at least one anchor (5) communicating information bidirectionally to determine the location of the tool,
said system including a hub (3) provided with a Wi-Fi communication means with said tool, said Wi-Fi communication means transmitting data tolerant of high latency and of a size greater than 100 kilobytes, said hub (3) and said fixed anchor (5) being connected by a wired network, and the system being **characterised in that** the radio communication means of the ultra-wideband type of said tool and of said at least one fixed anchor (5) are configured to additionally transmit control or command information for the tool (1).

2. The system for controlling a tool according to claim 1, **characterised in that** the radio communication means of said at least one anchor (5) are configured to periodically transmit the information to determine the location of the tool (1) during the time lapse of a predetermined duration.

3. The system for controlling a tool according to claim 2, **characterised in that** the time intervals transmitting control information and information for determining the location of the tool (1) are alternated.

4. The system for controlling a tool according to claim 3, **characterised in that** the durations of the time intervals have a duration comprised between 100 and 300 milliseconds.

5. The system for controlling a tool according to claim 1, **characterised in that** the control or command information is transmitted without time constraint according to a CSMA type scheme.

6. The system for controlling a tool (1) according to any one of claims 1 to 5, **characterised in that** it includes at least two hubs (3) each provided with a Wi-Fi communication means having different Wi-Fi access point references, the detection of the arrival of the tool (1) by the radio communication means of the ultra-wideband type in an area covered by a second hub (3) triggering the emission by the at least one anchor (5) to the tool (1) of the reference of the Wi-Fi access point and the identifier of the hub (3) associated with the location of the tool (1), the tool (1) using its Wi-Fi communication means to be in contact with this hub (3) and to receive therefrom operation information for the work associated with this location.

7. The system for controlling a tool according to any one of the preceding claims, **characterised in that** the tool is taken from the following set: a screwdriver, a drill or a tool for checking an industrial operation.
